(19)

Europäisches
Patentamt
European
Patent Office
Office européen
des brevets

(11)  **EP 4 517 631 A1**

(12)  # EUROPEAN PATENT APPLICATION

(43) Date of publication:
**05.03.2025 Bulletin 2025/10**

(21) Application number: **23194578.3**

(22) Date of filing: **31.08.2023**

(51) International Patent Classification (IPC):
**G06Q 20/38** (2012.01)   **G06Q 20/40** (2012.01)

(52) Cooperative Patent Classification (CPC):
**G06Q 20/382; G06F 16/901; G06Q 20/385;**
**G06Q 20/401**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Mastercard International Incorporated**
**Purchase, NY 10577 (US)**

(72) Inventors:
• **NOË, James Christian**
  **West Wickham (GB)**
• **BELYKH, Natalia**
  **London (GB)**
• **TIERNEY, John**
  **Merseyside (GB)**

(74) Representative: **Gill Jennings & Every LLP**
**The Broadgate Tower**
**20 Primrose Street**
**London EC2A 2ES (GB)**

(54)  ## ACCOUNT IDENTIFICATION INDEX STRUCTURE

(57)    A computer-implemented method is disclosed for constructing an index structure in a real-time payment network, the method comprising: building a dictionary comprising a plurality of words; identifying a first user account belonging to a first user, wherein first user account comprises information including an account number and an account name; creating a data record in the index structure for the first user; assigning a word group to the first user account, the word group comprising at least three words from the dictionary; and storing the assigned word group and the first user account information to the data record, wherein the assigned word group enables the first user account to be identified for receiving payment in the real-time payment network.

FIG. 5

**Description**

**FIELD OF THE INVENTION**

The invention relates to creating an index structure to identify and validate accounts in payment networks. Specifically, the invention relates to making payments to accounts identified from the index structure.

**BACKGROUND**

Computer networks often experience a large volume of network events. For example, a payment network enabling transfer of electronic funds can experience hundreds of thousands, millions or even tens of millions of network events per day in the form of individual transactions that each comprise electronic message(s) transmitted over the network.

Each network event requires payment information and details being transferred, which may potentially include errors or mistakes that may result in payments being incorrectly made or authorised (e.g. where money is either not transferred successfully or transferred to a wrong account). It is therefore desirable to make the account identification and validation process as accurate as possible, as each network event that is flagged as possibly being associated with an error that turns out to be a false positive constitutes a waste of resources such as processor cycles, power and memory, and may lead to individuals incurring financial loss.

Due to security, regulation and privacy concerns, payment networks often retain as little data as possible. This can result in accounts being more difficult to identify or validate. Personally identifiable information ("PII") associated with payment card account numbers or primary account numbers ("PAN"), such as accountholder date of birth, social security number, or even name, are often walled-off from payment networks in order to comply with applicable laws, privacy practices, security policies, etc. Thus, although an individual may be associated with several bank accounts and/or payment cards - and therefore several unique PANs and/or bank account numbers - the payment network typically does not retain PII that would be necessary to cross-reference each of the PANs with the individual.

A problem with known techniques is that they focus only on account numbers such as primary account numbers (PANs) and associated payment card accounts (i.e. a "PAN-centric" approach). The present invention aims to solve one or more of the problems mentioned above, and in particular may enable improved characterisation of typical user behaviour in terms of network events.

**SUMMARY OF INVENTION**

According to an aspect of the invention, there is provided a computer-implemented method for constructing an index structure in a real-time payment network, the method comprising: building a dictionary comprising a plurality of words; identifying a first user account belonging to a first user, wherein the first user account comprises information including an account number and an account name; creating a data record in the index structure for the first user; assigning a word group to the first user account, the word group comprising at least three words from the dictionary; and storing the assigned word group and the first user account information to the data record, wherein the assigned word group enables the first user account to be identified for receiving payment in the real-time payment network.

In this way, three words can be used to identify a user account without having to use long number-based entries, such as I BANs, account numbers or sort codes. The likelihood of errors in recognition (for example by misreading the numbers 6 or 8, or incorrectly reading handwritten numbers) or keying errors in number-based entries can be more effectively recognised and corrected since the dictionary may be built using known and common words in a language. It should therefore be appreciated that a keying error in a long number-based entry may wrongly identify another user account, whereas a spelling error in one or more of the three words may be more readily recognised and corrected to ensure that an intended user account is identified.

In addition, the present invention provides a more secure account identification and payment network system since it allows user accounts to be identified without the sharing of the sensitive number-based information. As should be appreciated, it is known that number-based account information can easily be fraudulently used to set up direct debit mandates or direct payments. However, in the present invention, the word group is used to identify an account for receiving payment and not for requesting or instructing payment. As such, a user has better control over the availability of the sensitive number-based account information.

Preferably, the method further comprises: identifying one or more card accounts associated with the first user account; and storing the identified one or more card accounts to the data record.

In this way, different payment types and transfers may be incorporated into the present account identification technique to link the three words associated with a user account to receive different forms of payment (for example, bank account-to-bank account payments, bank account to card account payments, or card account to card account payments).

These may include topping-up a pre-paid card account, paying a friend's bank account with a credit card account, government disbursements, tax payments, P2P, B2C, C2B and push-and-pull payments.

The method may further comprise: updating the data record to replace the first user account with a new first user account, the new first user account belonging to the first user; and/or updating the data record to replace the one or more stored card accounts with one or more new card accounts, the one or more new card accounts associated with the first user.

In this way, as a user account or card account details change for a specific user, the three words associated with the user can remain the same. This improves the lifecycle management of the words in the dictionary and further minimises the risk of keying errors or mistakes. It may also be possible for a consumer/merchant to change issuers and still keep the same three words. Preferably, if a user account is closed the words should be returned to the pool or repository of the dictionary from which the three word combinations / word group are selected.

Preferably, assigning the word group comprises applying one or more linguistic rules to prevent at least two of the three words from substantially rhyming and/or having a substantially same pronunciation. In this way, keying errors may be more effectively prevented. For example, language based tools may be used to prevent similar sounding words, such as sway, way and ways, being used in the same word group of three words. In another example, homonyms or words having a same pronunciation may also be prevented from being assigned to a same word group. Examples of homonyms or pairs of words having substantially same pronunciations include: read/red, read/reed, hi/high, weak/week, sun/so, sea/see, plane/plain, and meet/meat. One or more linguistic rules may also be applied to allow or disallow alternate spellings of words having a same meaning from being assigned to a same word group, such as colour/color, aluminium/aluminum, and specialise/specialize.

Preferably, the word group associated with the first user account cannot be assigned to another user account. The three words in a word group may be used in any order to identify the first user account, and therefore in order to prevent a user account from being incorrectly identified, a word assigned to a first user account cannot be assigned to another user account.

Preferably, each word in the in the dictionary is provided in a plurality of languages, and preferably wherein each word in the assigned word group can be provided in any one of the plurality of languages to identify the first user account. In this way, a user account may be identified more readily using one or more languages to input the three words. This provides a global lookup functionality to identify user accounts that may be in a different country to the country in which a search is initiated. The location of a user device or a server, e.g. by using a GPS or IP address, that performs a search may set an initial lookup in a particular region or country, and a word in a different language to the language of the country of the initial lookup may cause the lookup process to include a second region/country. Accented words may be accepted with or without the accents. Special characters (e.g. oe) may be accepted as œ or o and e. Non-romanized languages such as Japanese, Chinese, Cyrillic or Arabic may be converted into a romanized script and/or the dictionary may be built with the non-romanized languages, and vice versa. One or more linguistic rules may also be applied in the building of the dictionary to exclude words with substantially same pronunciations but different definitions across different languages. For example, "envie" in French means "I want to" and sounds like "envy" in English.

Preferably, assigning the word group comprises receiving an instruction to determine at least one of the at least three words. The assigning of the words in a word group may be completely random, where each word is randomly selected from the dictionary. Alternatively, one or more of the words in the at least three words may be chosen to provide a customised word group. As will be appreciated, the choosing of specific words may be dependent on the availability of words in the dictionary so as to not assign a same at least three words to two different user accounts. The method may further comprise excluding one or more words in the dictionary from further assigning to other user accounts to provide a customised word group. Preferably, the assigned word group does not include repeated words. Alternatively, the assigned word group may include one repeated word in the at least three words.

The method may further comprise: identifying a second user account belonging to a second user, wherein second user account comprises information including an account number and an account name; creating a second data record in the index structure for the second user; assigning a second word group to the second user account, the second word group comprising at least three further words from the dictionary, wherein at least one word in the second word group is different from at least one word in the first word group assigned to the first user account; and storing the assigned second word group and the second user account information to the second data record, wherein the assigned second word group enables the second user account to be identified for receiving payment in the real-time payment network. In this way, different word groups can be assigned to different user accounts for identification and receiving payment in a real-time payment network.

Preferably, assigning the second word group comprises applying one or more linguistic rules to prevent one or more of the following: the at least one word in the second word group from substantially rhyming and/or having a substantially same pronunciation with the different at least one word in the first word group; and the at least one word in the second word group from having a substantially same definition as the different at least one word in the first word group. For example, language based tools may be used to prevent similar groups of words being assigned to different users, e.g.

"John Smith, Shirt, Boat, House", "Amelia Jones, Short, Boat, House", "Adam Carter, Short, Ship, Home".

According to another aspect of the invention, there is provided a computer-implemented method of payment authorisation in a real-time payment network, the method comprising: receiving, from a first user, a transaction request to make a payment to a second user, the transaction request comprising an account name and a word group comprising at least three words; identifying an account associated with the second user from the transaction request from an index structure constructed in accordance with the first aspect of the invention; confirming the transaction request by comparing an account name and a word group associated with the second user account with the account name and the word group in the transaction request; and if the account name and each of the words in word group in the transaction request match the account name and each of the words in the word group associated with the second user account, authorising the payment from the first user to the second user. In this way, a second user can receive payment from the first user by identifying the second user's user account using the word group associated with the second user account (and without requiring any number-based information associated with the second user account).

Preferably, comparing the transaction request comprises matching each of the words in the word group in the transaction request with each of the words in the word group associated with the second user account irrespective of an order of the words in the word group in the transaction request.

At least one in the word group in the transaction request may be in a different language to the remaining words in the word group. In this way, a user account may be identified in a variety of different languages. Using the dictionary, the words can be entered in any language, with grace/fuzzy matching on words like "piscine" as "pool" or "piscine" or as "swimming pool". In this example, the term "swimming pool", despite being two words, may be inputted as one of the three words.

Preferably, the method further comprises: if at least one of the words in the word group and/or the account name in the transaction request do not match with the word group and account name in the second user account within a predetermined range, sending a message to the first user with an indication of the mismatched at least one word and/or account name and to request a corrected transaction request from the first user. In this way, a slightly incorrect spelling (e.g. with one or two incorrect letters) may still identify a user account or at least identify a number of user accounts from which an intended user account may be found. Alternative, and for security reasons, the first user may simply be informed that the details do not match, and they would then need to check all the details before re-submitting. This may prevent a brute force attack to find the words associated with a user's account.

According to another aspect of the invention, there is provided a system for constructing an index structure in a real-time payment network, the system configured to: build a dictionary comprising a plurality of words; identify a first user account belonging to a first user, wherein first user account comprises information including an account number and an account name; create a data record in the index structure for the first user; assign a word group to the first user account, the word group comprising at least three words from the dictionary; and store the assigned word group and the first user account information to the data record, wherein the assigned word group enables the first user account to be identified for receiving payment in the real-time payment network.

According to yet another aspect of the invention, there is provided a non-transitory computer-readable storage medium storing instructions thereon which, when executed by one or more processors, cause the processors to perform the method of first aspect and/or the second aspect of the invention.

**BRIEF DESCRIPTION OF DRAWINGS**

Embodiments of the present invention are described below, by way of example only, with reference to the accompanying drawings, in which:

Fig. 1 shows a selection of words in a plurality of different languages in a dictionary of the present invention;

Fig. 2 shows examples of user accounts with different assigned word groups according to the present invention;

Fig. 3 shows examples of user business accounts with different assigned word groups according to the present invention;

Fig. 4 shows further examples of user business accounts with different assigned word groups according to the present invention;

Fig. 5 shows a schematic of a user device making a P2P payment to a user account according to the present invention;

Fig. 6 shows another schematic of a user device making a P2P payment to a user account according to the present invention;

Fig. 7 shows another schematic of a user device making a P2P payment to a user account according to the present invention;

Fig. 8 shows another schematic of a user device making a P2P payment to a user account according to the present invention; and

Fig. 9 shows another schematic of a user device making a P2P payment to a user account according to the present invention.

**DETAILED DESCRIPTION**

Various aspects of the invention are now described with reference to the accompanying drawings. The description and specific examples included herein are intended for purposes of illustration only and are not intended to limit the scope of the present disclosure.

In the present disclosure, a dictionary must first be built, or compiled, to create a pool or repository of words from which words can be selected and assigned to a user account. The dictionary is built with at least the following considerations:

- Focus on common words, i.e. words that are known or familiar to most people / the general public.
- Focus on words that are easy to spell.
- Focus on words that do not have homonyms, for example "red and read", "steak and stake", "their, there and they're".
- Focus on words that do not sound like bad words in other languages and in the original language of a user.
- Consider the inclusion or exclusion of words with alternative spellings, for example "colour and color" or "neighbour and neighbor", though 'fuzzy' matching could resolve this in implementation.

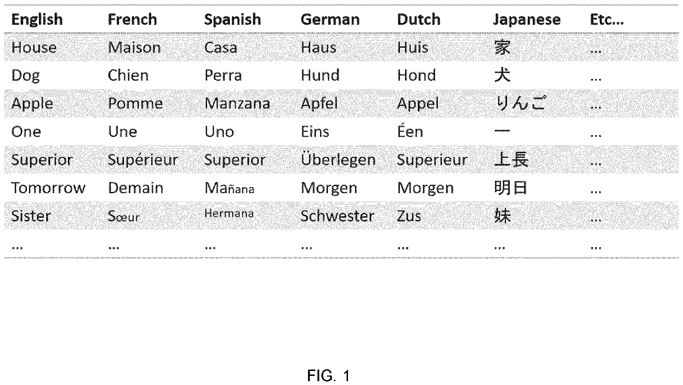

Figure 1 shows a table of some words that may be used in a dictionary according to the present invention. The dictionary is built in a plurality of languages, as shown in Figure 1, which includes English, French, Spanish, German, Dutch, and Japanese.

The average vocabulary of a US English speaker is approximately 42,000 words. Taking into account some of the above considerations, approximately 20% of these words can be removed to give an amount of approximately 33,000 words. 33,000 words would give around 6 trillion different three-word combinations:

$$_{33,000}C_3 \text{ combinations} = \frac{33,000!}{3!(33,000-1)!} \approx 6\,Trn$$

Some languages may have a smaller selection of commonly known words by the general public, such as Swedish which has a typical amount of around 20,000 headwords. This may limit a Swedish dictionary to around 1 trillion three-word combinations. A "headword" is defined as a stem word, for example "break", where the above count of 1 trillion combinations would exclude words that come from "break", such as "breaks", "breaking", or "broke" for example.

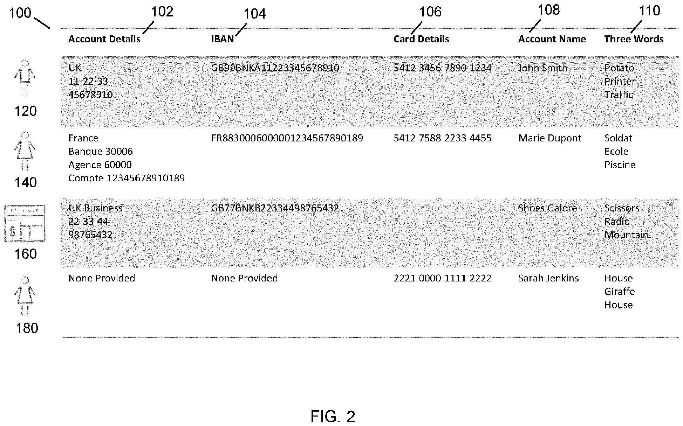

Figure 2 shows a table 100 of different exemplary accounts that have three-word word groups assigned to each account. The accounts may include different details, such as:

1. Bank account details 102, which may include an account type, a sort code, and an account number
2. International bank account number 104, or IBAN
3. Card account details 106
4. Account name 108
5. Three-word word group 110

A first account 120 under the account name "John Smith" is a personal UK bank account for an individual with associated sort code, account number and IBAN information. The first account 120 also includes a card account, as shown in the card account details 106 column in table 100. The first account 120 is randomly assigned three words "potato", "printer" and "traffic" from the dictionary.

By default, the three words may be randomly assigned. However, it may also be possible for a user, e.g. John Smith, to pick their own three words, which may be offered as a premium service. One of the three words may also be a name or a location.

Table 100 also includes a second exemplary account 140 under the account name "Marie Dupont", which also includes bank account details, IBAN details and card account details. The second account 140 is randomly assigned three French words "soldat", "école" and "piscine" from the dictionary. For this second account 140, the accented words should be accepted with or without the accents. Additionally, masculine, feminine and neuter versions (where appropriate) should be accepted - for example soldat (m) and soldate (f) should both be accepted.

Table 100 shows a third account 160 which is a business account under the account name "Shoes Galore". The third account 160 has bank account details and IBAN details, but no card account details. The third exemplary account 160 is randomly assigned three words "scissors", "radio" and "mountain" from the dictionary.

Table 100 also shows a fourth card only account 180 under the account name "Sarah Jenkins". The fourth account 180 may be a pre-paid card account and only includes card account details. To top up this account, a user may identify the fourth account 180 using the three-word word group randomly assigned to this account: "house", "giraffe" and "house". As can be seen, the word "house" has been repeated for this card-only fourth account 180.

The fourth account 180 may be a separate card account that a user wishes to set up to allow payments to be received directly to the card account, as opposed to the user's bank account. Similarly, another example may be the use of a three-word word group to be linked to one or more tokens.

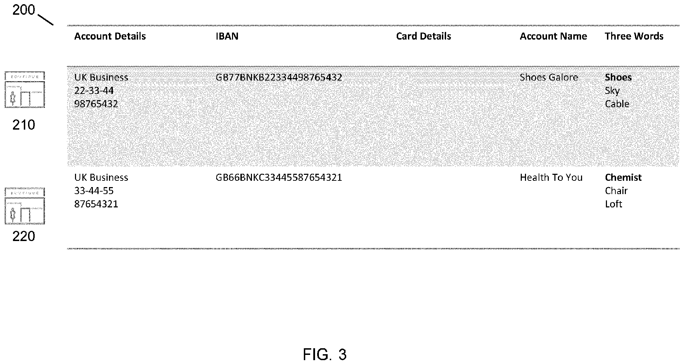

Figure 3 shows a table 200 of different exemplary business accounts that have three-word word groups assigned to each account. In this example, the business accounts have customised three-word words groups to provide some indication of the merchant type or good that the business offers.

A first account 210 in table 200 shows a business account with the name "Shoes Galore". The first account 210 has bank account and IBAN details, but no card account details. The first exemplary account 210 is randomly assigned two words "sky" and "cable" from the dictionary, and has one customised word "shoes" to make up the three-word word group. As will be appreciated, the customised word "shoes" indicates that "Shoes Galore" deals with shoes in their business.

Table 200 shoes a second exemplary business account 220 with the account name "Health To You". The second business account 220 also includes bank account and IBAN details, but no card account details in table 200. The second account 220 is randomly assigned two words "chair" and "loft" from the dictionary, and has one customised word "chemist" to make up the three-word word group. As will be appreciated, the customised word "chemist" may indicate that "Health To You" provides chemist and pharmacy services.

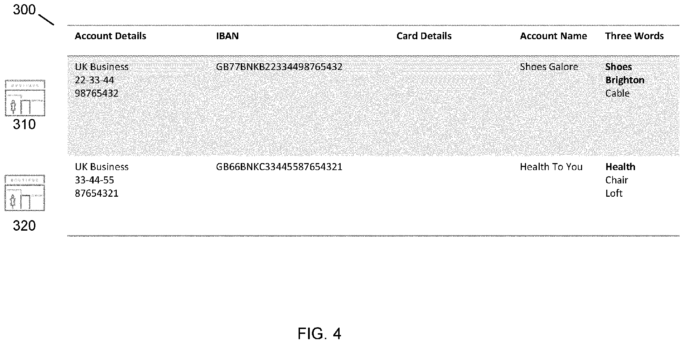

Figure 4 shows a yet another table 300 of different business accounts having three-word word groups assigned to each account. In this example, the business accounts have three-word words groups with further customisation.

A first account 310 in table 300 again shows a business account with the name "Shoes Galore". The first account 310 has bank account and IBAN details, but no card account details. The first exemplary account 310 is randomly assigned one word and "cable" from the dictionary, and has two customised words "shoes" and "Brighton" to make up the three-word word group. As will be appreciated, the customised word "shoes" indicates that "Shoes Galore" deals with shoes in their business. The word "Brighton" is a custom word that indicates a location of the business.

Table 300 shoes a second business account 320 with the account name "Health To You". The second business account 320 also includes bank account and IBAN details, but no card account details in table 300. The second exemplary account 320 is randomly assigned two words "chair" and "loft" from the dictionary, and has one customised word "Health To You" to make up the three-word word group. As can be seen, the customised word "Health" is one of the words in the business account name. This option may be made available for some well-known retailers or businesses, which can be readily identified by its name. A further option which can be implemented may be to remove such a word (i.e. a word that has been selected and is the same as the name of a large well-known business) from the dictionary from which words are randomly assigned to a word group.

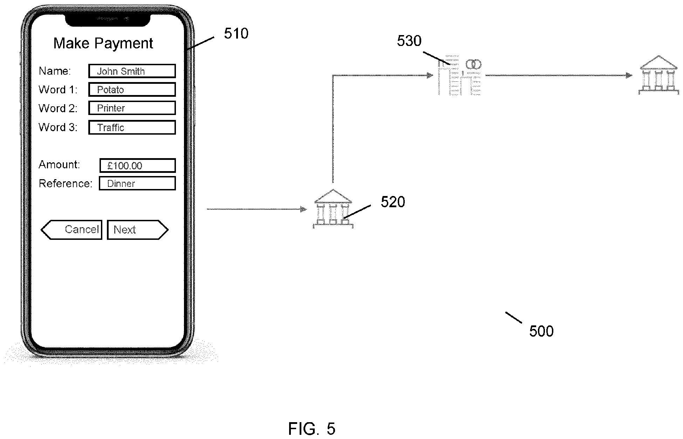

Figure 5 shows a schematic flow diagram 500 of a first user making a payment to a second user "John Smith". The first user uses an App of their user device 510 and selects a "make a payment" function in the App.

The first user is then required to enter an account name and the assigned three words associated with the account into the App. In this specific example, the recipient account name is "John Smith" and the assigned three words are "potato", "printer" and "traffic". The three words may be provided to the App in any order and be equally valid.

The App may also require the first user to provide a payment amount and a optional reference at this stage, and the first user includes an amount of £100.00 and a reference of "dinner" to indicate to the recipient the reason for payment. In another example, these additional details may be requested from the first user at a later stage, after the recipient account has been identified for instance.

After the required information has been provided, the user device 510 sends the information to an issuer 520 which further sends the account identification details to an account identification system 530 or service offering the account identification scheme for authentication / validation of the intended recipient account. When the recipient account is successfully validated (i.e. when the provided account name and three words match the account name and the three words stored in the account identification system 530) the payment is authorised by the issuer 520, and a payment confirmation message may be sent to the user device 510. Further validation or payment steps may be incorporated into the flow 500 as will be apparent to the skilled person.

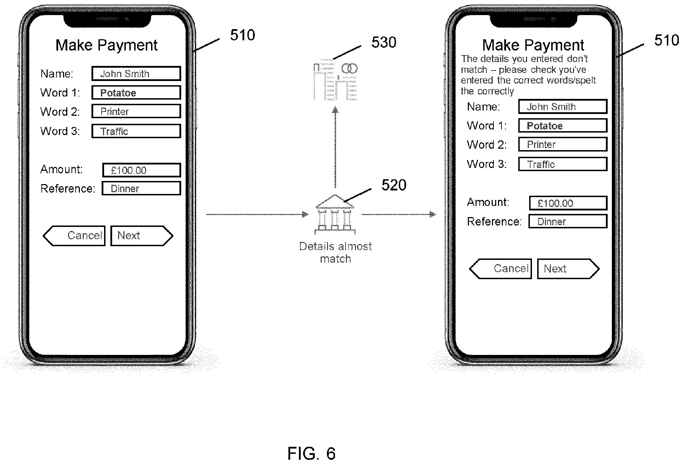

Figure 6 shows a schematic of a correction page that may be shown to the first user by the App in the user device 510 in the event of a typographical error or spelling mistake when the supplied information is checked by the account identification system 530.

In this example, the recipient account name is "John Smith" and the assigned three words are "potato", "printer" and "traffic", which are the same details as those in the example of Figure 5. However, instead of typing "potato" in this example, the first user incorrectly submits "potatoe". The account identification system 530 picks up the spelling mistake in the word "potatoe", but using language-based tools or auto-correct functions, determines that the incorrect word is a close match to the correct word "potato". Accordingly, the account identification system 530 determines that the incorrect word "potatoe" is close enough to the assigned word "potato" and sends a correction message back to the first user for further confirmation. The correction message may read "The details you entered don't match - please check you've entered the correct words/spelt the words correctly", or a similar message. As should be appreciated, if the spelling mistake is determined to be too far from the required word, then a different error message may be sent to the first user (e.g. a message without a spelling check prompt).

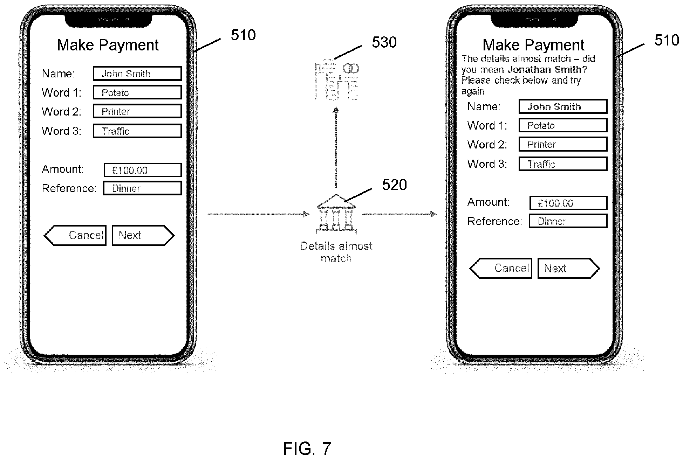

Figure 7 shows another schematic of a correction page that may be shown to the first user by the App in the user device 510 in the event of a typographical error or spelling mistake when the supplied information is checked by the account identification system 530.

Similar to the examples in Figures 5 and 6, the first user inputs the details for the recipient as "John Smith" for the account name and "potato", "printer" and "traffic" as the assigned three words. However, the recipient's account name is "Jonathan Smith" instead of "John Smith". The account identification system 530 picks up the incorrect first name in the supplied account name, but using language-based tools or auto-correct functions, determines that the incorrect first name "John" is a close match to the correct first name "Jonathan". Language-base rules may also be implemented such that the account identification system 530 allows "John" or "Jon" to be provided instead of "Jonathan". Accordingly, the account identification system 530 sends a confirmation message back to the first user for further confirmation, which may read "The details almost match - did you mean Jonathan Smith? Please check below and try again", or a similar message. As should be appreciated, if the spelling mistake is determined to be too far from the required word, then a different error message may be sent to the first user (e.g. a message without a spelling check prompt).

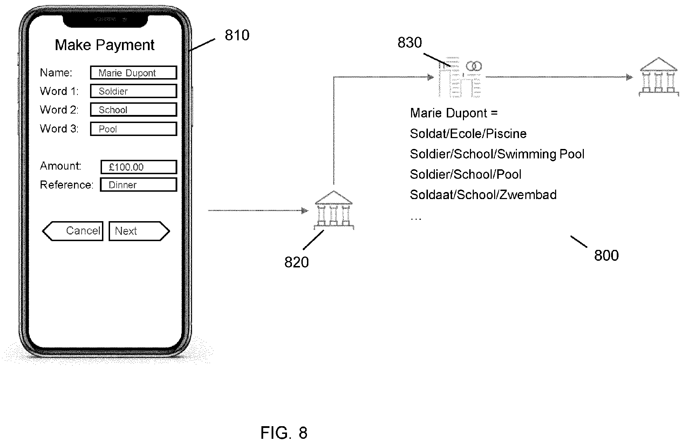

Fig. 8 shows another schematic flow diagram 800 of a first user making a payment to a second user "Marie Dupont" to explain cross-border or international transfers and payments. In this specific example, the recipient account name is "Marie Dupont" and is associated with a French bank account, and a first user (the payer) is in an English speaking country, such as the UK. The assigned three words for Marie Dupont's account are three French words "soldat", "ecole" and "piscine".

The first user uses an App in their user device 810 and selects a "make a payment" function in the App. The first user is then required to enter an account name and the assigned three words associated with the account into the App. However, the first user may be unfamiliar with the French language and the recipient may have communicated their three words to the first user in English. Accordingly, the first user provides the three words as "soldier", "school" and "pool" into the App, which are the corresponding English terms for the assigned three words.

After the required information has been provided, the user device 810 sends the information to an issuer 820 which further sends the account identification details to an account identification system 830. The account identification system 830 then uses language-based rules to check that the supplied English terms sufficiently correspond with the assigned three words associated with supplied account name. The account identification system 830 may also use other language-based tools, for example grace/fuzzy matching on words such as "piscine" which may be translated as swimming pool, to ensure that the supplied words are correctly validated. When the recipient account is successfully validated (i.e. when the provided account name and three words validly match the account name and the three words stored in the account identification system 830) the payment is authorised by the issuer 820, and a payment confirmation message may be sent to the user device 810. Further validation or payment steps may be incorporated into the flow 800 as will be apparent to the skilled person.

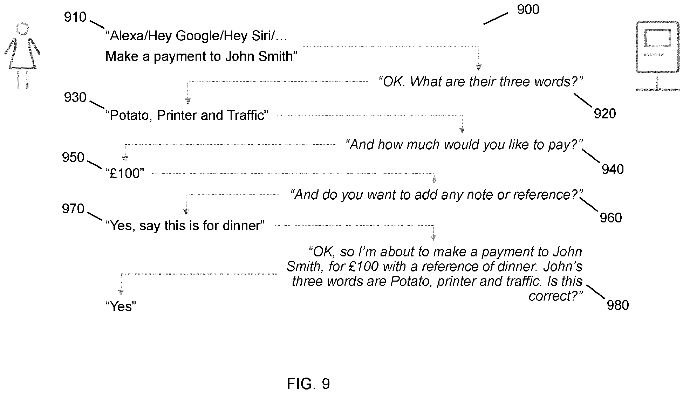

Figure 9 shows a schematic flow diagram 900 of a first user making a payment to a second user "John Smith" using a voice-assisted App in a user device.

At step 910, the first user may speak a command to activate the App in the user device with the words "Alexa / Hey Google / Hey Siri, etc. make a payment to John Smith". The user device will then process the spoken command and instruct the App to make a payment to John Smith.

At step 920 the App may then provide a response to request the first user to provide the three words associated with John Smith's account. For example the App may ask, "Ok. What are their three words?"

The first user will then respond with the three words at step 930, for example by saying "potato, printer and traffic", and the App will process the words "potato", "printer" and "traffic". At this step 930, the App may send the account name "John Smith" and the provided three words to an issuer for validation, or alternatively the App may request further information before sending the payment request to the issuer.

The App requests the payment amount from the user at step 940, for the first user to respond at step 950. The App may also ask the first user whether they wish to add a note or reference to the payment at step 960, for the first user to respond at step 970.

At step 980, the App then confirms with the first user the account name, three words, payment amount and reference note, for example by saying "Ok, so I'm about to make a payment to John Smith for an amount of £100 with a reference of dinner. John Smith's three words are potato, printer and traffic. Is this correct?" If the first user responds with an affirmative, the App sends the payment request to the issuer for validation and payment.

Additionally, a user may be prompted to authenticate themselves, for example using voice biometrics, or a push to a companion application on a mobile device.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense. While the disclosure has been described in terms of various specific embodiments, those skilled in the art will recognize that the disclosure can be practiced with modification within the scope of the claims.

As used herein, the term "non-transitory computer-readable media" is intended to be representative of any tangible computer-based device implemented in any method or technology for short-term and long-term storage of information, such as, computer-readable instructions, data structures, program modules and submodules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be passed to the devices in a secure manner. Any such resulting program, having computer-readable code means, may be embodied or provided within one or more computer readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1.  A computer-implemented method for constructing an index structure in a real-time payment network, the method comprising:

    building a dictionary comprising a plurality of words;
    identifying a first user account belonging to a first user, wherein first user account comprises information including an account number and an account name;
    creating a data record in the index structure for the first user;
    assigning a word group to the first user account, the word group comprising at least three words from the dictionary; and
    storing the assigned word group and the first user account information to the data record,
    wherein the assigned word group enables the first user account to be identified for receiving payment in the real-time payment network.

2.  The method of claim 1, further comprising:

    identifying one or more card accounts associated with the first user account; and
    storing the identified one or more card accounts to the data record.

3.  The method of claims 1 or 2, further comprising:

    updating the data record to replace the first user account with a new first user account, the new first user account belonging to the first user; and/or
    updating the data record to replace the one or more stored card accounts with one or more new card accounts, the one or more new card accounts associated with the first user.

4. The method of claims 1, 2 or 3, wherein assigning the word group comprises applying one or more linguistic rules to prevent at least two of the three words from substantially rhyming and/or having a substantially same pronunciation.

5. The method of any of the preceding claims, wherein the word group associated with the first user account cannot be assigned to another user account.

6. The method of any of the preceding claims, wherein each word in the in the dictionary is provided in a plurality of languages, and preferably wherein each word in the assigned word group can be provided in any one of the plurality of languages to identify the first user account.

7. The method of any of the preceding claims, wherein assigning the word group comprises receiving an instruction to determine at least one of the at least three words.

8. The method of any of the preceding claims, further comprising:

   identifying a second user account belonging to a second user, wherein second user account comprises information including an account number and an account name;
   creating a second data record in the index structure for the second user;
   assigning a second word group to the second user account, the second word group comprising at least three further words from the dictionary, wherein at least one word in the second word group is different from at least one word in the first word group assigned to the first user account; and
   storing the assigned second word group and the second user account information to the second data record, wherein the assigned second word group enables the second user account to be identified for receiving payment in the real-time payment network.

9. The method of claim 8, wherein assigning the second word group comprises applying one or more linguistic rules to prevent one or more of the following:

   the at least one word in the second word group from substantially rhyming and/or having a substantially same pronunciation with the different at least one word in the first word group; and
   the at least one word in the second word group from having a substantially same definition as the different at least one word in the first word group.

10. A computer-implemented method of payment authorisation in a real-time payment network, the method comprising:

   receiving, from a first user, a transaction request to make a payment to a second user, the transaction request comprising an account name and a word group comprising at least three words;
   identifying an account associated with the second user from the transaction request from an index structure constructed in accordance with any of claims 1 to 9;
   confirming the transaction request by comparing an account name and a word group associated with the second user account with the account name and the word group in the transaction request; and
   if the account name and each of the words in word group in the transaction request match the account name and each of the words in the word group associated with the second user account,
   authorising the payment from the first user to the second user.

11. The method of claim 10, wherein comparing the transaction request comprises matching each of the words in the word group in the transaction request with each of the words in the word group associated with the second user account irrespective of an order of the words in the word group in the transaction request.

12. The method of claims 10 or 11, wherein at least one in the word group in the transaction request is in a different language to the remaining words in the word group.

13. The method of claims 10, 11 or 12, further comprising:

   if at least one of the words in the word group and/or the account name in the transaction request do not match with the word group and account name in the second user account within a predetermined range,

sending a message to the first user with an indication of the mismatched at least one word and/or account name and to request a corrected transaction request from the first user.

14. A system for constructing an index structure in a real-time payment network, the system configured to:

build a dictionary comprising a plurality of words;
identify a first user account belonging to a first user, wherein first user account comprises information including an account number and an account name;
create a data record in the index structure for the first user;
assign a word group to the first user account, the word group comprising at least three words from the dictionary; and
store the assigned word group and the first user account information to the data record,
wherein the assigned word group enables the first user account to be identified for receiving payment in the real-time payment network.

15. A non-transitory computer-readable storage medium storing instructions thereon which, when executed by one or more processors, cause the processors to perform the method of any of claims 1 to 13.

| English | French | Spanish | German | Dutch | Japanese | Etc... |
|---|---|---|---|---|---|---|
| House | Maison | Casa | Haus | Huis | 家 | ... |
| Dog | Chien | Perra | Hund | Hond | 犬 | ... |
| Apple | Pomme | Manzana | Apfel | Appel | りんご | ... |
| One | Une | Uno | Eins | Éen | 一 | ... |
| Superior | Supérieur | Superior | Überlegen | Superieur | 上長 | ... |
| Tomorrow | Demain | Mañana | Morgen | Morgen | 明日 | ... |
| Sister | Sœur | Hermana | Schwester | Zus | 妹 | ... |
| ... | ... | ... | ... | ... | ... | ... |

FIG. 1

| | Account Details | IBAN | Card Details | Account Name | Three Words |
|---|---|---|---|---|---|
| **120** | UK<br>11-22-33<br>45678910 | GB99BNKA11223345678910 | 5412 3456 7890 1234 | John Smith | Potato<br>Printer<br>Traffic |
| **140** | France<br>Banque 30006<br>Agence 60000<br>Compte 12345678910189 | FR8830006000001234567890189 | 5412 7588 2233 4455 | Marie Dupont | Soldat<br>Ecole<br>Piscine |
| **160** | UK Business<br>22-33-44<br>98765432 | GB77BNKB22334498765432 | | Shoes Galore | Scissors<br>Radio<br>Mountain |
| **180** | None Provided | None Provided | 2221 0000 1111 2222 | Sarah Jenkins | House<br>Giraffe<br>House |

100, 102, 104, 106, 108, 110

FIG. 2

200

| | Account Details | IBAN | Card Details | Account Name | Three Words |
|---|---|---|---|---|---|
| 210 | UK Business<br>22-33-44<br>98765432 | GB77BNKB22334498765432 | | Shoes Galore | **Shoes**<br>Sky<br>Cable |
| 220 | UK Business<br>33-44-55<br>87654321 | GB66BNKC33445587654321 | | Health To You | **Chemist**<br>Chair<br>Loft |

FIG. 3

300

| Account Details | IBAN | Card Details | Account Name | Three Words |
|---|---|---|---|---|
| UK Business 22-33-44 98765432 | GB77BNKB22334498765432 | | Shoes Galore | **Shoes Brighton** Cable |
| UK Business 33-44-55 87654321 | GB66BNKC33445587654321 | | Health To You | **Health** Chair Loft |

310

320

FIG. 4

FIG. 5

**Make Payment** 510

Name: John Smith
Word 1: Potatoe
Word 2: Printer
Word 3: Traffic

Amount: £100.00
Reference: Dinner

Cancel | Next

530

520

Details almost match

**Make Payment** 510
The details you entered don't
match – please check you've
entered the correct words/spelt
the correctly

Name: John Smith
Word 1: Potatoe
Word 2: Printer
Word 3: Traffic

Amount: £100.00
Reference: Dinner

Cancel | Next

FIG. 6

**Make Payment** / 510

| | |
|---|---|
| Name: | John Smith |
| Word 1: | Potato |
| Word 2: | Printer |
| Word 3: | Traffic |
| Amount: | £100.00 |
| Reference: | Dinner |

< Cancel | Next >

/ 530

/ 520

Details almost match

**Make Payment** / 510
The details almost match – did you mean **Jonathan Smith**? Please check below and try again

| | |
|---|---|
| Name: | John Smith |
| Word 1: | Potato |
| Word 2: | Printer |
| Word 3: | Traffic |
| Amount: | £100.00 |
| Reference: | Dinner |

< Cancel | Next >

FIG. 7

FIG. 8

910

900

"Alexa/Hey Google/Hey Siri/...
Make a payment to John Smith"

"OK. What are their three words?"

930

920

"Potato, Printer and Traffic"

"And how much would you like to pay?"

950

940

"£100"

"And do you want to add any note or reference?"

970

960

"Yes, say this is for dinner"

"OK, so I'm about to make a payment to John Smith, for £100 with a reference of dinner. John's three words are Potato, printer and traffic. Is this correct?"

980

"Yes"

FIG. 9

Europäisches
Patentamt

European
Patent Office

Office européen
des brevets

# EUROPEAN SEARCH REPORT

**Application Number**

EP 23 19 4578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/202340 A1 (BANERJEE KSHITIJ [SG] ET AL) 25 June 2020 (2020-06-25) * abstract; claims 1-20; figures 1-4 * * paragraphs [0001], [0004] – [0042], [0052] – [0115] * | 1-15 | INV. G06Q20/38 G06Q20/40 |
| X | Anonymous: "Tokenization (data security) – Wikipedia", , 17 January 2019 (2019-01-17), XP055896122, Retrieved from the Internet: URL:https://en.wikipedia.org/w/index.php?title=Tokenization_(data_security)&oldid=878817945 [retrieved on 2022-02-28] * the whole document * | 1-15 | |
| X | WO 2020/002406 A1 (ERLAND MOELLER OG SOENNER K/S [DK]) 2 January 2020 (2020-01-02) * abstract; claims 1-26; figures 1-4 * * page 1, line 34 – page 23, line 3 * * page 23, line 12 – page 30, line 22 * | 1-15 | |
| A | US 2021/383387 A1 (RATICA ADAM GRANT [US] ET AL) 9 December 2021 (2021-12-09) * abstract * * paragraphs [0011], [0012], [0028] – [0059] * | 1-15 | TECHNICAL FIELDS SEARCHED (IPC) G06Q G07G |
| A | US 2014/222681 A1 (KLEIN CHARMAINE [US] ET AL) 7 August 2014 (2014-08-07) * abstract * * paragraphs [0007] – [0015], [0035] – [0122] * | 1-15 | |

The present search report has been drawn up for all claims

| Place of search | Date of completion of the search | Examiner |
|---|---|---|
| The Hague | 12 January 2024 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.............................................................
& : member of the same patent family, corresponding document

EPO FORM 1503 03.82 (P04C01)

# EP 4 517 631 A1

## ANNEX TO THE EUROPEAN SEARCH REPORT
## ON EUROPEAN PATENT APPLICATION NO.

EP 23 19 4578

This annex lists the patent family members relating to the patent documents cited in  the above-mentioned European search report.
The members are as contained in the European Patent Office EDP file on
The European Patent Office is in no way liable for these particulars which are merely given for the purpose of information.

12-01-2024

| Patent document cited in search report | | Publication date | Patent family member(s) | | Publication date |
|---|---|---|---|---|---|
| US 2020202340 | A1 | 25-06-2020 | NONE | | |
| WO 2020002406 | A1 | 02-01-2020 | NONE | | |
| US 2021383387 | A1 | 09-12-2021 | CN | 115335843 A | 11-11-2022 |
| | | | US | 2021383387 A1 | 09-12-2021 |
| | | | WO | 2021252408 A1 | 16-12-2021 |
| US 2014222681 | A1 | 07-08-2014 | US | 2012116973 A1 | 10-05-2012 |
| | | | US | 2014222681 A1 | 07-08-2014 |

EPO FORM P0459

For more details about this annex : see Official Journal of the European Patent Office, No. 12/82

21